# DEMANDE DE BREVET EUROPEEN

(11) **EP 1 044 715 A1**
(43) Date de publication de la demande: **18.10.2000**
(21) Numéro de dépôt: 00400226.7
(22) Date de dépôt: 28.01.2000
(51) Int. Cl.: B01D 53/047, B01D 53/04, B01D 53/22, A61M 16/10

(54) **Equipement médical de concentration/liquéfaction d'oxygène utilisable en oxygènothérapie**

(30) Priorité: 13.04.1999 FR 9904585
(71) Demandeur: Air Liquide Sante (International), 75341 Paris Cedex 07 (FR)
(72) Inventeur: Boissin, Jean-Claude, 38330 Saint-Ismier (FR); Hennebel, Vincent, 92310 Sevres (FR)
(74) Mandataire: Le Moenner, Gabriel

(57) **Abrégé**

L'invention concerne un équipement portable ou transportable, utilisable en oxygénothérapie à domicile ou à l'hôpital, destiné aux personnes souffrant d'insuffisances respiratoires et traitées par administration d'oxygène gazeux afin de corriger les teneurs en gaz de leur sang, en particulier les teneurs en dioxyde de carbone et en oxygène. Cet équipement comprend des moyens de compression d'air (31); des moyens concentrateurs (32) permettant de produire de l'oxygène gazeux ayant une pureté de 50 à 99%; des moyens de liquéfaction d'oxygène (33); des moyens d'accumulation et stockage de l'oxygène liquéfié par les moyens de liquéfaction (34); et éventuellement des moyens de réchauffage/vaporisation de l'oxygène liquéfié. L'invention porte aussi sur un procédé de production et liquéfaction d'oxygène obtenu à partir d'air ambiant.

## Description

Le but de la présente invention est de proposer un équipement médical, de préférence portable ou transportable, permettant notamment l'oxygénothérapie à domicile et la déambulation du patient, lequel équipement permet de produire et liquéfier un gaz riche en oxygène à partir d'air ambiant en vue de sa fourniture ultérieure à un utilisateur.

Classiquement, certaines personnes souffrant d'insuffisances respiratoires sont traitées par administration d'oxygène gazeux afin de corriger les teneurs en gaz de leur sang, en particulier les teneurs en dioxyde de carbone et en oxygène.

Dans certains cas, l'état pathologique de ces personnes nécessite l'administration chronique et de longue durée d'oxygène gazeux, notamment pour les patients atteints de broncho-pneumopathies chroniques obstructives, dont la pression artérielle en oxygène est stabilisée à des valeurs inférieures à 55 mm de mercure.

Pour ce faire, divers modes et équipements de fourniture d'oxygène pouvant être mis en oeuvre à domicile ont été développés.

Actuellement, l'oxygène utilisé à cette fin est :
- soit amené sur site d'utilisation en étant stocké sous forme gazeuse, par exemple dans des bouteilles de gaz de taille variable, pour être ensuite administré au patient,
- soit amené sur site d'utilisation en étant stocké sous forme liquéfié, par exemple dans un réservoir adapté, lequel réservoir est relié à un système d'évaporation destiné à vaporiser l'oxygène liquide, de manière à pouvoir l'administrer au patient sous forme gazeuse ; un tel appareil est commercialisé par la Société TAEMA sous la dénomination FREELOX™,
- soit produit directement sur site d'utilisation au moyen d'un dispositif concentrateur permettant d'extraire l'oxygène de l'air grâce à une adsorption sélective de l'azote sur un tamis moléculaire selon un cycle d'adsorption avec pression alternée, en particulier un cycle PSA (Pressure Swing Adsorption) pour produire de l'oxygène gazeux ayant une pureté de 90 à 95% environ ; un tel appareil est commercialisé par la Société TAEMA sous la dénomination ZEFIR™.

Dans tous les cas, l'administration de l'oxygène au patient se fait par l'intermédiaire d'une interface de distribution de gaz susceptible d'être reliée aux voies aériennes supérieures de l'utilisateur, en particulier des lunettes nasales délivrant au patient de l'oxygène gazeux de manière continu, c'est-à-dire pendant les phases inspiratoires et expiratoires, ou de manière synchronisée avec la respiration, c'est-à-dire pendant les phases inspiratoires seulement.

Pour une administration efficace de l'oxygène au patient de manière synchronisée avec les phases inspiratoires du patient, on peut, par exemple, utiliser un système à valve "économiseuse" du type de celui commercialisé par la Société TAEMA sous la dénomination OPTIMOX™.

En général, le choix de l'équipement d'administration d'oxygène doit non seulement tenir compte de la consommation d'oxygène du patient, c'est-à-dire du débit d'oxygène consommé par le patient, et de la durée quotidienne du traitement, mais aussi permettre, autant que faire se peut, au patient de continuer à mener une existence normale, c'est-à-dire de continuer à déambuler et à exercer des activités à l'extérieur de son domicile, notamment des activités professionnelles, sans être gêné ou au minimum par ledit équipement.

Partant de là, les équipements portables préférentiellement utilisés actuellement sont ceux munis d'un réservoir d'oxygène liquide relié à un système d'évaporation destiné à vaporiser l'oxygène liquide avant son envoi vers le patient, c'est-à-dire les appareils de type FREELOX™.

Toutefois, ces appareils présentent l'inconvénient d'être d'autonomie relativement limitée, à savoir d'environ 24 heures lorsqu'ils fonctionnent de manière synchronisée avec la respiration, c'est-à-dire pendant les phases inspiratoires, mais de seulement quelques heures de manière continue, c'est-à-dire pendant les phases inspiratoires et expiratoires.

En général, de tels réservoirs ont une contenance allant de 0.5 à 2 litres d'oxygène liquide, soit environ 400 à 1600 litres d'oxygène gazeux.

Une fois que le réservoir d'oxygène liquide est vide, il doit être rempli à nouveau auprès d'une source d'oxygène liquide, tel un réservoir de stockage par exemple, ou remplacé par un autre réservoir plein.

Il s'ensuit alors que la déambulation est, dans ce cas, étroitement dépendante de l'approvisionnement en oxygène liquide du réservoir, donc aussi de l'approvisionnement en oxygène liquide de la source d'oxygène liquide ou du remplacement du réservoir vide par un réservoir plein.

Par ailleurs, il existe des systèmes permettant de remplir des réservoirs, telles des bouteilles, portables avec de l'oxygène gazeux produit à partir de concentrateurs d'oxygène.

De tels équipements comprennent un concentrateur d'oxygène permettant de prélever et/ou de séparer l'oxygène de l'air ambiant et de le comprimer ensuite dans un réservoir portable déconnectable ou non du concentrateur.

Toutefois, certains équipements ne prévoient pas la possibilité de dissocier le réservoir du reste du concentrateur et, dans ce cas, le remplissage du réservoir se fait, par exemple, non seulement pendant les phases expiratoires, mais éventuellement aussi pendant les phases inspiratoires par dérivation d'une partie de l'oxygène produit par le concentrateur vers le réservoir de conditionnement.

Bien que ce type d'équipement offre une alternative au patient déambulant, à un coût de fonctionnement moindre par rapport à la livraison de sources d'oxygène sous forme liquide, il s'avère que ce type d'équipement présente plusieurs inconvénients, notamment :
- il nécessite un investissement supérieur à celui d'un dispositif à réserve d'oxygène liquide,
- il ne permet pas toujours d'aboutir à une production suffisante d'oxygène pour satisfaire les besoins du patient, en particulier lorsque celui-ci a des besoins importants en oxygène.
- l'autonomie du réservoir portable d'oxygène gazeux est souvent plus limitée que pour un dispositif à réserve d'oxygène liquide, à savoir de quelques heures au maximum,
- étant donné que seule une faible partie du débit d'oxygène produit est dérivée vers le réservoir d'oxygène, le temps de remplissage du réservoir peut s'avérer très long, en particulier lorsque le débit nécessaire au patient est sensiblement égal ou équivalent de celui de production du concentrateur, par exemple de 4 à 6 litres par minute, et
- la compression d'oxygène gazeux peut présenter des risques, notamment dus à la présence éventuelle dans le flux d'oxygène gazeux de gouttelettes de graisse et/ou d'huile provenant des moyens de compression.

Le but de la présente invention est alors de proposer un équipement portable d'oxygénothérapie à domicile et de déambulation amélioré, lequel ne présente pas les inconvénients susmentionnés, ainsi qu'un procédé de fonctionnement d'un tel équipement.

En d'autres termes, l'invention vise à proposer un appareil présentant une autonomie plus élevée, un débit d'oxygène produit plus important pouvant être utilisé aux fins du remplissage efficace d'un réservoir de stockage d'oxygène et dont la sécurité globale soit améliorée.

L'invention concerne alors un équipement médical portable de fourniture d'un gaz riche en oxygène à un utilisateur comprenant :
- des moyens de compression de gaz pour fournir de l'air à une pression supérieure à 10⁵ Pa à des moyens concentrateurs de gaz,
- des moyens concentrateurs de gaz permettant de produire un gaz riche en oxygène contenant de 50 % vol. à 99 % vol. d'oxygène à partir d'air comprimé par lesdits moyens de compression de gaz,
- des moyens de liquéfaction de gaz permettant de liquéfier au moins une partie de l'oxygène contenu dans ledit gaz riche en oxygène produit par lesdits moyens concentrateurs de gaz,
- des moyens d'accumulation de gaz permettant de recueillir et stocker, au moins temporairement, au moins une partie de l'oxygène liquéfié par lesdits moyens de liquéfaction de gaz,
- des moyens de réchauffage/vaporisation de gaz permettant de réchauffer et vaporiser au moins une partie de l'oxygène liquéfié provenant desdits moyens d'accumulation de gaz, et
- des moyens de d'acheminement de gaz permettant d'acheminer au moins une partie de l'oxygène produit par lesdits moyens concentrateurs de gaz et/ou de l'oxygène réchauffé et vaporisé par lesdits moyens de réchauffage/vaporisation jusqu'à une interface de distribution de gaz susceptible d'être reliée aux voies aériennes supérieures d'un utilisateur.

L'invention concerne aussi un équipement médical pour produire et liquéfier un gaz riche en oxygène comprenant :
- des moyens de compression de gaz pour fournir de l'air à une pression supérieure à 10⁵ Pa à des moyens concentrateurs de gaz,
- des moyens concentrateurs de gaz permettant de produire un gaz riche en oxygène contenant de 50 % vol. à 99 % vol. d'oxygène à partir d'air comprimé par lesdits moyens de compression de gaz,
- des moyens de liquéfaction de gaz permettant de liquéfier au moins une partie de l'oxygène contenu dans ledit gaz riche en oxygène produit par lesdits moyens concentrateurs de gaz, et
- des moyens d'accumulation de gaz permettant de recueillir et stocker, au moins temporairement, au moins une partie de l'oxygène liquéfié par lesdits moyens de liquéfaction de gaz.

De préférence, les moyens concentrateurs de gaz sont choisis parmi :
- au moins une enceinte de séparation de gaz contenant au moins un lit d'adsorbant et/ou au moins un lit de catalyseur, de préférence au moins deux enceintes de séparation de gaz fonctionnant en parallèle, et/ou
- au moins un module membranaire, de préférence au moins deux modules membranaires agencés en série.

Selon le cas, le dispositif selon l'invention peut comprendre l'une ou plusieurs des caractéristiques suivantes :
- les moyens d'alimentation en courant électrique sont une batterie autonome ou analogue.
- des moyens d'alimentation en courant électrique pour alimenter en courant électrique au moins lesdits moyens de compression de gaz,
- les moyens concentrateurs de gaz sont au moins une enceinte de séparation de gaz contenant au moins un lit d'adsorbant contenant des particules de zéolite de type X ou A échangée par un ou des cations métalliques, de préférence des cations lithium, calcium, potassium, sodium et/ou zinc.
- au moins un lit d'adsorbant contenant des particules de zéolite de type X ou A échangée par un ou des cations métalliques est situé en aval d'au moins un lit d'alumine destinée à arrêter au moins une partie des impuretés de type vapeur d'eau ou CO₂ susceptibles d'être présentes dans le flux gazeux, de préférence une alumine activée, éventuellement dopée ou imprégnée.
- les moyens concentrateurs de gaz sont au moins une enceinte de séparation de gaz, de préférence deux enceintes agencées en parallèle, fonctionnant selon un cycle de type PSA, chaque enceinte contenant au moins un lit d'adsorbant contenant des particules de zéolite X échangée à au moins 80% par des cations lithium.
- les moyens concentrateurs de gaz sont un ou deux modules membranaires agencés en cascade, la sortie perméat du premier module membranaire étant en communication fluidique avec les moyens d'accumulation de gaz, de préférence la sortie perméat du premier module membranaire est, en outre, en communication fluidique avec les moyens de d'acheminement de gaz et/ou l'entrée retentât du deuxième module membranaire.
- les moyens de liquéfaction de gaz sont choisis parmi les dispositifs à détente Joule-Thomson et/ou les dispositifs à refroidissement /condensation, notamment les dispositifs à cycle de Stirling ou de Gifford-MacMahon.
- il comporte, en outre, des moyens de filtration, en particulier un ou plusieurs filtres, agencés en amont et/ou en aval des moyens de compression.
- les moyens de d'acheminement de gaz comportent une ou plusieurs canalisations de gaz et/ou en ce que l'interface de distribution de gaz susceptible d'être reliée aux voies aériennes supérieures d'un utilisateur est choisie parmi les lunettes respiratoires et les masques respiratoires.
- les moyens d'accumulation de gaz sont choisis parmi les récipients adaptés au stockage de gaz liquéfié, de préférence une ou des petites bouteilles de gaz facilement portables et/ou transportables par l'utilisateur.

Par ailleurs, l'invention concerne aussi un procédé pour produire et liquéfier un gaz riche en oxygène à partir d'air susceptible d'être mis en oeuvre par un équipement selon l'invention, comprenant les étapes de :
(a) compression d'air jusqu'à une pression supérieure à 10⁵ Pa, de préférence à une pression de 1,1.10⁵ Pa à 5.10⁵ Pa,
(b) séparation de l'air comprimé à l'étape (a) pour produire un gaz riche en oxygène contenant de 50 % vol. à 99 % vol. d'oxygène,
(c) liquéfaction d'au moins une partie du gaz riche en oxygène,
(d) accumulation et stockage, au moins temporaire, d'au moins une partie de l'oxygène liquéfié dans des moyens d'accumulation de gaz.

Selon le cas, le procédé de l'invention peut comprendre l'une ou plusieurs des caractéristiques suivantes :
- à l'étape (b), la séparation de l'air comprimé est effectuée par adsorption ou par perméation, de préférence par adsorption selon un cycle de type PSA en utilisant un adsorbant zéolitique de type X échangé par des cations métalliques, de préférence des cations calcium et/ou lithium.
- à l'étape (c), la liquéfaction d'au moins une partie du gaz riche en oxygène se fait par détente Joule-Thomson ou par refroidissement/condensation de l'oxygène..
- à l'étape (b), l'adsorbant est une zéolite X échangée à au moins 70% par des cations calcium ou à au moins 80% par des cations lithium.
- il comporte une étape (e) de réchauffage/vaporisation d'au moins une partie de l'oxygène liquéfié provenant desdits moyens d'accumulation de gaz,
- il comporte une étape (f) d'envoi d'au moins une partie de l'oxygène réchauffé et vaporisé à l'étape (e) dans une ou plusieurs canalisations de gaz reliées à une interface de distribution de gaz.
- à l'étape (e), l'oxygène est réchauffé à une température supérieure à 5°C, de préférence à une température de 15°C à 25°C.
- les moyens d'accumulation de gaz sont choisis parmi les récipients adaptés au stockage de gaz liquéfié, par exemple des petites bouteilles de gaz facilement portables ou transportables par l'utilisateur.

L'invention va maintenant être décrite plus en détail en références aux figures annexées, données à titre illustratif mais non limitatif.

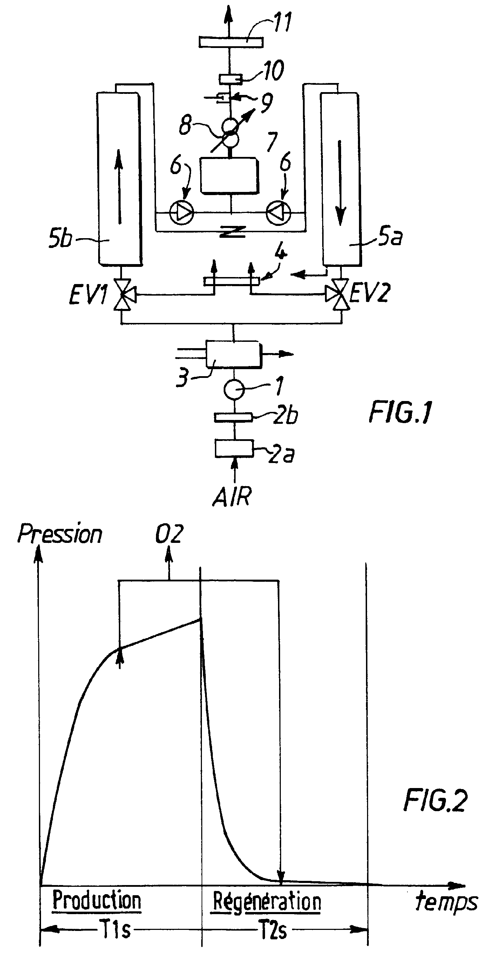

La figure 1 représente un schéma partiel d'un équipement selon l'invention, lequel comprend des moyens de compression de gaz, à savoir un compresseur 1, pour fournir de l'air à une pression supérieure à 10⁵ Pa, de préférence à une pression de 1,1.10⁵ Pa à 5.10⁵ Pa, à des moyens concentrateurs de gaz, à savoir deux récipients d'adsorption ou adsorbeurs 5a, 5b.

Les moyens concentrateurs de gaz 5a, 5b permettant de produire un gaz riche en oxygène contenant de 50 % vol. à 99 % vol. d'oxygène, habituellement de 90 % à 95% d'oxygène, à partir d'air comprimé par lesdits moyens de compression 1 de gaz.

Plus précisément, les deux adsorbeurs 5a, 5b fonctionnent en parallèle selon un cycle PSA, c'est-à-dire que l'adsorbeur 5b est en phase de production d'oxygène, pendant que l'adsorbeur 5a est en phase de régénération, et inversement.

Afin de disposer d'un débit d'oxygène produit plus important, on utilise préférentiellement un adsorbant de type zéolite X enrichi à au moins 80% au lithium par une technique classique d'échange d'ions.

De tels adsorbants et procédés PSA sont notamment décrits dans les documents EP-A-885646, EP-A-885049, EP-A-885089, EP-A-884088, EP-A-880989, EP-A-884086 et EP-A-875277.

En effet, la substitution d'un tamis moléculaire classique par un tamis de type zéolite au lithium permet d'augmenter la quantité d'O₂ produit par augmentation du rendement et de la productivité du concentrateur.

Ainsi à demande constante du patient, plus d'oxygène est disponible pour la liquéfaction subséquente.

De préférence, l'air ambiant est comprimé après filtration par des filtres 2a, 2b, adéquats, notamment un filtre bactériologique 2b.

L'air comprimé et filtré alimente ensuite l'un des deux adsorbants 5a, 5b remplis de tamis moléculaire.

L'azote étant sélectivement adsorbé sur le tamis moléculaire, le gaz en sortie de l'adsorbeur 5a ou 5b en phase de production est presque exclusivement composé d'oxygène (90-95%).

L'oxygène ainsi produit est envoyé vers une capacité tampon 7 à partir d'un seuil de pression déclenchant l'ouverture d'un clapet 6.

Avant saturation de l'adsorbant contenu dans l'adsorbeur 5a ou 5b en phase de production, un jeu d'électrovannes EV1, EV2 dirige l'air comprimé vers le second adsorbeur 5b ou 5a, précédemment en phase de régénération, et qui entre alors, à son tour, en phase de production.

Le premier adsorbeur 5b ou 5a est alors, quant à lui, régénéré par remise à la pression atmosphérique ou à une pression sub-atmosphérique et est purgé par circulation à contre-courant d'une fraction du débit d'oxygène de l'autre adsorbeur qui est lui en phase de production.

Un tel cycle PSA est schématisé sur la figure 2, où on a représenté le profil des pressions dans chacun des adsorbeurs 5a, 5b, ainsi que la durée des cycles de production d'oxygène et de régénération.

Chaque adsorbeur est soumis cycliquement à :
- une phase de production de durée T1 durant laquelle l'adsorbeur est mis sous pression en étant alimenté en air comprimé de manière à produire de l'oxygène ;
- une phase de régénération de durée T2=T1 durant laquelle l'adsorbeur est dépressurisé puis purgé à contre-courant avec une partie de l'oxygène produit par l'autre adsorbeur en phase de production.

Selon l'invention, on utilise avantageusement un tamis zéolitique enrichi au lithium car de tels tamis présentent des caractéristiques d'adsorption supérieures aux tamis classiques, par exemple une zéolite X ou A non-échangée.

Il va de soi que les performances du concentrateur dépendent notamment de l'alimentation en air, notamment le compresseur 1, des propriétés du tamis choisi, en particulier les isothermes d'adsorption, la géométrie et la granulométrie des particules..., de la quantité de tamis utilisée, du profil du cycle PSA mis en oeuvre, de la température...

Ces performances sont exprimées notamment par le rendement, c'est-à-dire la quantité d'O₂ produit/quantité d'O₂ entrant, et par la productivité, c'est-à-dire la quantité d'O₂ produit/volume d'adsorbant.

Classiquement, pour un équipement délivrant 5 l/min d'O₂ à 90%, on obtient un rendement de l'ordre de 25%.

Or, à 10⁵ Pa, la capacité d'adsorption pour l'azote passe d'environ 8 ml/g pour un tamis 13X classique à près de 20 ml/g pour un tamis de type zéolite 13X échangée au lithium, et, de manière analogue, la sélectivité (rapport entre la capacité d'adsorption de l'azote et de l'oxygène) passe de 3 à 6.

Il s'ensuit alors que les gains en rendement qui découlent de l'utilisation d'un tamis au lithium selon l'invention sont alors de l'ordre d'un facteur 2 par rapport à un tamis classique.

De tels gains en rendement dus à l'utilisation d'un tamis au lithium permettent de réduire le dimensionnement de l'équipement par rapport à un concentrateur classique car la quantité d'adsorbant utilisé est moindre et on peut alors utiliser un compresseur à débit plus faible, tout en gardant une production d'oxygène identique en débit et en teneur.

En outre, en substituant le tamis classique par une quantité équivalente de tamis lithium de granulométrie comparable, on observe, dans un premier temps, une augmentation de la teneur en oxygène produit si le débit de production n'est pas modifié.

Si dans un second temps, la vanne de production est réglée de façon à maintenir la pureté à 90%, le débit de production escompté sera de 8 à 9 l/min, ce qui correspond à un rendement de l'ordre de 45%.

De là, disposant d'une production d'oxygène supérieure par rapport aux concentrateurs classiques, une dérivation en aval des moyens de concentrations permet d'envoyer une partie de l'oxygène produit et non consommé par le patient, de l'ordre de 2 à 6 l/min, vers un système de liquéfaction.

Pour ce faire, des moyens de liquéfaction de gaz permettent de liquéfier l'oxygène contenu dans le gaz riche en oxygène produit par les moyens concentrateurs 5a, 5b et non consommé par le patient.

Après liquéfaction, l'oxygène est envoyé vers des moyens d'accumulation de gaz, tel un réservoir ou une bouteille de conditionnement avec isolation thermique, permettant de recueillir et stocker, au moins temporairement, l'oxygène liquéfié par les moyens de liquéfaction.

La liquéfaction de l'oxygène peut être obtenue soit par un cycle de liquéfaction classique, par exemple une détente Joule-Thomson avec ou sans machine de détente, soit par refroidissement et condensation sur une surface refroidie par un cryo-réfrigérateur, par exemple une machine à cycle de Stirling, à cycle de Gifford McMahon, ou une machine à pulse tube.

Il est à souligner, cependant, que la liquéfaction par condensation est préférée car elle permet d'éviter les risques liés à la compression de l'oxygène gazeux.

L'oxygène liquide formé est stocké dans une réserve de liquide, tel que le réservoir de déambulation.

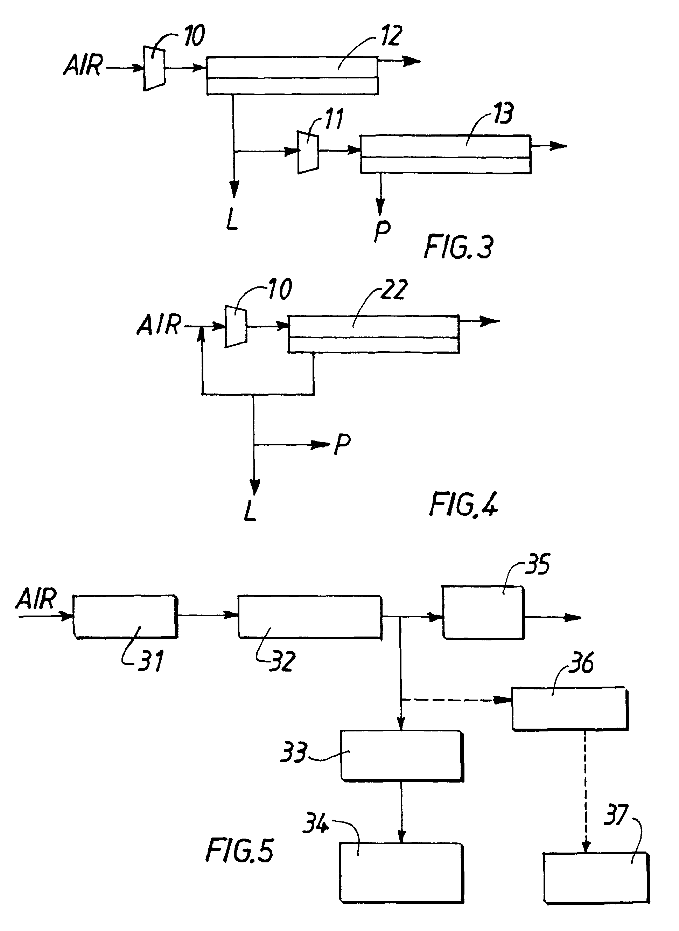

En variante, afin de disposer d'encore plus de gaz pour le conditionnement du système de déambulation, une variante de l'invention consiste à remplacer le ou les adsorbeurs 5a, 5b, par un ou plusieurs modules membranaires, tels ceux schématisés sur les figures 3 et 4.

Dans le cas à deux modules 12, 13 de la figure 3, le premier module 12 est alimenté en air comprimé (en 10) et le second module 13 est alimenté, après recompression en 11, par une partie du débit perméat enrichi en oxygène du module 12 précédent.

L'oxygène en sortie perméat du second module 13, ayant une pureté d'au moins 85%, est envoyé vers le patient P en vue de l'oxygénothérapie, alors que le complément du débit perméat qui n'alimente pas le second module 13 est dirigé vers l'unité de liquéfaction L.

Au cours de la phase de liquéfaction L par condensation, on contrôle le procédé afin de condenser préférentiellement l'oxygène et d'éliminer l'azote résiduel pour enrichir le liquide destiné au remplissage de la réserve.

Une variante de réalisation à un seul module 22 de perméation est représentée sur la figure 4.

Dans ce cas, on recomprime avec le compresseur 10 une partie du débit d'oxygène en sortie perméat du module 22 par mélange avec de l'air entrant, c'est-à-dire qu'on effectue un recyclage d'une partie de l'oxygène produit ; l'autre partie du débit perméat étant envoyée, d'une part, vers le patient P et, d'autre part, le système de liquéfaction L.

Par ailleurs, l'équipement comporte aussi des moyens de réchauffage/vaporisation de gaz permettant de réchauffer et vaporiser, à la demande, l'oxygène liquéfié provenant des moyens d'accumulation de gaz, c'est-à-dire du réservoir de déambulation.

Des moyens d'acheminement de gaz, telles des canalisations de gaz, permettent d'acheminer l'oxygène produit par les moyens de concentration et/ou l'oxygène réchauffé et vaporisé par les moyens de réchauffage/vaporisation jusqu'à une interface de distribution de gaz, par exemple des lunettes respiratoires, susceptible d'être reliée aux voies aériennes supérieures de l'utilisateur.

Par ailleurs, la figure 5 représente un schéma de l'agencement global d'un équipement selon l'invention.

Plus précisément, de l'air atmosphérique est comprimé (en 31) jusqu'à une pression, en général, de 1,1.10⁵ Pa à 5.10⁵ Pa, en étant préférentiellement filtré avant et/ après compression.

Après compression, l'air subit une séparation (en 32) pour produire un gaz riche en oxygène contenant de 50 % vol. à 99 % vol. d'oxygène, en général de 85 % à 95% d'oxygène. Ceci est réalisé comme décrit ci-avant et schématisé sur les figures 1, 3 ou 4.

Ensuite, ce flux gazeux riche en oxygène peut être envoyé directement vers le patient P, en étant éventuellement préalablement stocké temporairement dans une capacité tampon ( en 35) ou analogue.

Toutefois, lorsque la demande en oxygène du patient P est faible et/ou lorsque la quantité de flux gazeux riche en oxygène produit est supérieure aux besoins du patient P, une partie variable du gaz riche en oxygène est soumise à une liquéfaction (en 33), comme décrit ci-avant, puis conservée dans un réservoir de déambulation (en 34) en vue d'être utilisé ultérieurement par le patient P, après avoir été auparavant vaporisée et éventuellement réchauffée à une température supérieure à 5°C par des moyens de réchauffage/vaporisation (non montrés), de préférence d'au moins 18°C.

L'envoi d'au moins une partie de l'oxygène réchauffé et vaporisé au patient P se fait classiquement via une ou plusieurs canalisations de gaz reliées à une interface de distribution de gaz, tel un masque respiratoire.

En outre, optionnellement, une portion de l'oxygène gazeux produit par les moyens de concentration (en 32) peut aussi être re-comprimée (en 36) puis stocké dans un réservoir portable (en 37) d'oxygène gazeux, sans subir de liquéfaction.

De manière générale, l'équipement selon l'invention offre donc la possibilité de liquéfier toute ou partie de la production d'oxygène sortant d'un concentrateur afin de remplir une réserve portable liquide permettant la déambulation du patient et lui offrant une autonomie nettement supérieure à une bouteille portable classique.

L'équipement selon l'invention est particulièrement adapté au domaine médical, mais peut aussi être utilisé dans le domaine sportif, par exemple pour fournir un complément d'oxygène à un sportif après un effort physique.

## Revendications

1. Equipement médical portable ou transportable de fourniture d'un gaz riche en oxygène à un utilisateur comprenant :
- des moyens de compression de gaz pour fournir de l'air à une pression supérieure à 10⁵ Pa à des moyens concentrateurs de gaz,
- des moyens concentrateurs de gaz permettant de produire un gaz riche en oxygène contenant de 50 % vol. à 99 % vol. d'oxygène à partir d'air comprimé par lesdits moyens de compression de gaz,
- des moyens de liquéfaction de gaz permettant de liquéfier au moins une partie de l'oxygène contenu dans ledit gaz riche en oxygène produit par lesdits moyens concentrateurs de gaz,
- des moyens d'accumulation de gaz permettant de recueillir et stocker, au moins temporairement, au moins une partie de l'oxygène liquéfié par lesdits moyens de liquéfaction de gaz,
- des moyens de réchauffage/vaporisation de gaz permettant de réchauffer et vaporiser au moins une partie de l'oxygène liquéfié provenant desdits moyens d'accumulation de gaz, et
- des moyens de d'acheminement de gaz permettant d'acheminer au moins une partie de l'oxygène produit par lesdits moyens concentrateurs de gaz et/ou de l'oxygène réchauffé et vaporisé par lesdits moyens de réchauffage/vaporisation jusqu'à au moins une interface de distribution de gaz susceptible d'être reliée aux voies aériennes supérieures d'un utilisateur.

2. Equipement médical pour produire et liquéfier un gaz riche en oxygène comprenant :
- des moyens de compression de gaz pour fournir de l'air à une pression supérieure à 10⁵ Pa à des moyens concentrateurs de gaz,
- des moyens concentrateurs de gaz permettant de produire un gaz riche en oxygène contenant de 50 % vol. à 99 % vol. d'oxygène à partir d'air comprimé par lesdits moyens de compression de gaz,
- des moyens de liquéfaction de gaz permettant de liquéfier au moins une partie de l'oxygène contenu dans ledit gaz riche en oxygène produit par lesdits moyens concentrateurs de gaz, et
- des moyens d'accumulation de gaz permettant de recueillir et stocker, au moins temporairement, au moins une partie de l'oxygène liquéfié par lesdits moyens de liquéfaction de gaz.

3. Equipement selon l'une des revendications 1 ou 2, caractérisé en ce que les moyens concentrateurs de gaz sont choisis parmi :
- au moins une enceinte de séparation de gaz contenant au moins un lit d'adsorbant et/ou au moins un lit de catalyseur, de préférence au moins deux enceintes de séparation de gaz fonctionnant en parallèle, et/ou
- au moins un module membranaire, de préférence au moins deux modules membranaires agencés en série.

4. Equipement selon l'une des revendications 1 à 3, caractérisé en ce que les moyens concentrateurs de gaz sont au moins une enceinte de séparation de gaz contenant au moins un lit d'adsorbant contenant des particules de zéolite de type X ou A échangée par un ou des cations métalliques, de préférence des cations lithium, calcium, potassium, sodium et/ou zinc.

5. Equipement selon l'une des revendications 1 à 4, caractérisé en ce que les moyens concentrateurs de gaz sont au moins une enceinte de séparation de gaz, de préférence deux enceintes agencées en parallèle, fonctionnant selon un cycle de type PSA, chaque enceinte contenant au moins un lit d'adsorbant contenant des particules de zéolite X échangée à au moins 80% par des cations lithium.

6. Equipement selon l'une des revendications 1 à 3, caractérisé en ce que les moyens concentrateurs de gaz sont un ou deux modules membranaires agencés en cascade, la sortie perméat du premier module membranaire étant en communication fluidique avec les moyens d'accumulation de gaz, de préférence la sortie perméat du premier module membranaire est, en outre, en communication fluidique avec les moyens de d'acheminement de gaz et/ou l'entrée retentât du deuxième module membranaire.

7. Equipement selon l'une des revendications 1 à 6, caractérisé en ce que les moyens de liquéfaction de gaz sont choisis parmi les dispositifs à détente Joule-Thomson et/ou les dispositifs à refroidissement /condensation, notamment les dispositifs à cycle de Stirling ou de Gifford-MacMahon.

8. Equipement selon l'une des revendications 1 à 7, caractérisé en ce qu'il comporte, en outre, des moyens de filtration, en particulier un ou plusieurs filtres, agencés en amont et/ou en aval des moyens de compression.

9. Equipement selon la revendication 2, caractérisé en ce qu'il comporte, en outre, des moyens de réchauffage/vaporisation de gaz permettant de réchauffer et vaporiser au moins une partie de l'oxygène liquéfié provenant desdits moyens d'accumulation de gaz, et/ou des moyens de d'acheminement de gaz permettant d'acheminer au moins une partie de l'oxygène produit par lesdits moyens concentrateurs de gaz et/ou de l'oxygène réchauffé et vaporisé par lesdits moyens de réchauffage/vaporisation jusqu'à au moins une interface de distribution de gaz susceptible d'être reliée aux voies aériennes supérieures d'un utilisateur.

10. Equipement selon l'une des revendications 1 à 9, caractérisé en ce qu'il comporte, en outre, des moyens d'alimentation en courant électrique pour alimenter en courant électrique au moins lesdits moyens de compression de gaz.

11. Procédé pour produire et liquéfier un gaz riche en oxygène à partir d'air susceptible d'être mis en oeuvre par un équipement selon l'une des revendications 1 à 10, comprenant les étapes de :
(a) compression d'air jusqu'à une pression supérieure à 10⁵ Pa, de préférence à une pression de 1,1.10⁵ Pa à 5.10⁵ Pa,
(b) séparation de l'air comprimé à l'étape (a) pour produire un gaz riche en oxygène contenant de 50 % vol. à 99 % vol. d'oxygène,
(c) liquéfaction d'au moins une partie du gaz riche en oxygène, et
(d) accumulation et stockage, au moins temporaire, d'au moins une partie de l'oxygène liquéfié dans des moyens d'accumulation de gaz.

12. Procédé selon la revendication 11, caractérisé en ce qu'à l'étape (b), la séparation de l'air comprimé est effectuée par adsorption ou par perméation, de préférence par adsorption selon un cycle de type PSA en utilisant un adsorbant zéolitique de type X échangé par des cations métalliques, de préférence des cations calcium et/ou lithium.

13. Procédé selon la revendication 11, caractérisé en ce qu'à l'étape (c), la liquéfaction d'au moins une partie du gaz riche en oxygène se fait par détente Joule-Thomson ou par refroidissement/condensation de l'oxygène..

14. Procédé selon l'une des revendications 11 ou 12, caractérisé en ce qu'à l'étape (b), l'adsorbant est une zéolite X échangée à au moins 60% par des cations calcium ou à au moins 80% par des cations lithium, de préférence entre 84% et 98% par des cations lithium.

15. Procédé selon l'une des revendications 11 à 14, caractérisé en ce qu'il comporte, en outre, une étape de :
(e) réchauffage/vaporisation d'au moins une partie de l'oxygène liquéfié provenant desdits moyens d'accumulation de gaz.

16. Procédé selon la revendication 15, caractérisé en ce qu'il comporte, en outre, une étape de :
(f) envoi d'au moins une partie de l'oxygène réchauffé et vaporisé à l'étape (e) dans une ou plusieurs canalisations de gaz reliées à une interface de distribution de gaz.

17. Procédé selon la revendication 16, caractérisé en ce qu'à l'étape (e), l'oxygène est réchauffé à une température supérieure à 5°C, de préférence à une température de 15°C à 25°C.
